# FASCICULE DE BREVET EUROPEEN

(11) **EP 2 182 677 B1**
(45) Date de publication et mention de la délivrance du brevet: **26.07.2017**
(21) Numéro de dépôt: 09174715.4
(22) Date de dépôt: 30.10.2009
(51) Int. Cl.: H04L 12/24, G06F 21/00

(54) **Contrôle de configuration de securité dans un réseau de télécommunications**
Kontrolle der Sicherheitskonfiguration in einem Fernmeldenetz
Security configuration control in a telecommunications network

(30) Priorité: 30.10.2008 FR 0857383
(43) Date de publication de la demande: 05.05.2010
(73) Titulaire: ALCATEL LUCENT, 92100 Boulogne-Billancourt (FR)
(72) Inventeur: Papillon, Serge, 91620, NOZAY (FR); Grisouard, Sylvain, 78141, VELIZY (FR)
(74) Mandataire: Berthier, Karine

(56) Documents cités:
- EP-A- 1 768 044
- US-A1- 2008 047 016
- NGUYEN PHAM ET AL: "Towards a Security Cockpit" INFORMATION SECURITY AND ASSURANCE, 2008. ISA 2008. INTERNATIONAL CONFERENCE ON, IEEE, PISCATAWAY, NJ, USA, 24 avril 2008 (2008-04-24), pages 374-379, XP031248775 ISBN: 978-0-7695-3126-7

## Description

La présente invention concerne la sécurité dans un réseau de télécommunications, et plus particulièrement le contrôle des configurations de sécurité dans des équipements du réseau de télécommunications.

Généralement, la découverte qu'une configuration de sécurité relative à un équipement de réseau n'est plus valide, c'est-à-dire n'est plus en conformité avec la politique de sécurité, a lieu lors d'une vérification de cette configuration de sécurité après la constatation d'un problème dans l'équipement de réseau. Cette configuration est ensuite changée manuellement par un administrateur de réseau.

Actuellement, lorsqu'un opérateur a défini une ou plusieurs configurations de sécurité dans un réseau de télécommunications, l'opérateur ne dispose d'aucun moyen pour contrôler de manière automatique et régulière qu'une configuration de sécurité utilisée dans le réseau est compatible avec la configuration définie initialement par l'opérateur, et pour corriger automatiquement une configuration de sécurité erronée.

Un objectif de l'invention est de remédier aux inconvénients précédents en vérifiant automatiquement que des équipements d'un réseau de télécommunications ont des configurations de sécurité en conformité avec des configurations de référence prédéfinies et en corrigeant automatiquement toute configuration de sécurité erronée.

Pour atteindre cet objectif, un procédé pour contrôler la configuration d'équipements dans un réseau de télécommunications, est caractérisé en ce qu'il comprend les étapes suivantes :
transmettre depuis un serveur au moins une requête contenant une partie d'un profil de sécurité à au moins un agent dédié à au moins un équipement de réseau,
exécuter dans l'agent au moins un test d'une configuration d'un équipement de réseau en fonction de ladite partie du profil de sécurité et produire un résultat de ce test,
transmettre depuis l'agent une réponse contenant le résultat au serveur,
si le résultat diffère d'une référence incluse dans ladite partie du profil de sécurité, transmettre depuis le serveur une autre requête contenant une autre partie du profil de sécurité à l'agent, et
modifier dans l'agent la configuration de l'équipement du réseau en fonction de ladite autre partie du profil de sécurité.

Avantageusement, l'invention permet à l'opérateur du réseau de télécommunications de s'assurer de manière régulière, par exemple tous les jours, qu'une configuration de sécurité d'un équipement en fonctionnement est conforme à la configuration de sécurité validée initialement. L'opérateur peut en outre remplacer automatiquement cette configuration de sécurité d'un équipement en fonctionnement par cette configuration de sécurité validée initialement, ou par toute autre configuration de sécurité prédéfinie par l'opérateur.

L'invention offre un moyen de gestion centralisé pour contrôler et modifier des configurations de sécurité d'équipements du réseau, de manière à être réactif à tout type d'évènement, telle qu'une attaque à l'encontre d'un équipement de réseau, pour lequel une configuration de sécurité plus élevée peut être attribuée rapidement.

Selon une autre caractéristique de l'invention, le serveur peut recevoir au moins deux résultats qui diffèrent de références respectives, et les deux résultats sont appliqués à un ensemble d'algorithmes pour fournir un autre résultat en fonction duquel est déterminée ladite autre partie du profil de sécurité contenue dans la requête à transmettre à l'agent.

L'invention concerne également un système pour contrôler la configuration d'équipements dans un réseau de télécommunications, comprenant un serveur relié à au moins un agent dédié à au moins un équipement de réseau, caractérisé en ce que:
le serveur comprend des moyens pour transmettre au moins une requête contenant une partie d'un profil de sécurité à l'agent,
l'agent comprend des moyens pour exécuter au moins un test d'une configuration d'un équipement de réseau en fonction de ladite partie du profil de sécurité et produire un résultat de ce test, et des moyens pour transmettre une réponse contenant le résultat au serveur,
le serveur comprend des moyens pour transmettre une autre requête contenant une autre partie du profil de sécurité à l'agent, si le résultat diffère d'une référence incluse dans ladite partie du profil de sécurité, et
l'agent comprend des moyens pour modifier la configuration de l'équipement du réseau en fonction de ladite autre partie du profil de sécurité pour modifier.

L'invention concerne encore un serveur pour contrôler la configuration d'équipements dans un réseau de télécommunications, caractérisé en ce qu'il comprend :
des moyens pour transmettre au moins une requête contenant une partie d'un profil de sécurité à au moins un agent dédié à au moins un équipement de réseau, afin que l'agent exécute au moins un test d'une configuration d'un équipement de réseau en fonction de ladite partie du profil de sécurité, produise un résultat de ce test, et transmette une réponse contenant le résultat au serveur,
des moyens pour transmettre, si le résultat diffère d'une référence incluse dans ladite partie du profil de sécurité, une autre requête contenant une autre partie du profil de sécurité à l'agent, afin que l'agent modifie la configuration de l'équipement du réseau en fonction de ladite autre partie du profil de sécurité.

L'invention concerne encore un agent pour contrôler la configuration d'équipements dans un réseau de télécommunications, caractérisé en ce qu'il comprend :
des moyens pour recevoir au moins une requête transmise depuis un serveur et contenant une partie d'un profil de sécurité,
des moyens pour exécuter au moins un test d'une configuration d'un équipement de réseau en fonction de ladite partie du profil de sécurité et produire un résultat de ce test,
des moyens pour transmettre une réponse contenant le résultat au serveur,
des moyens pour recevoir une autre requête transmise depuis le serveur et contenant une autre partie du profil de sécurité, si le résultat diffère d'une référence incluse dans ladite partie du profil de sécurité, et
des moyens pour modifier la configuration de l'équipement du réseau en fonction de ladite autre partie du profil de sécurité.

La présente invention et les avantages qu'elle procure seront mieux compris au vu de la description ci-après faite en référence aux figures annexées, dans desquelles:
- la figure 1 est un bloc-diagramme schématique d'un système de sécurité selon l'invention inclus dans un réseau de télécommunications; et
- la figure 2 est un algorithme d'un procédé de contrôle de configuration de sécurité selon l'invention.

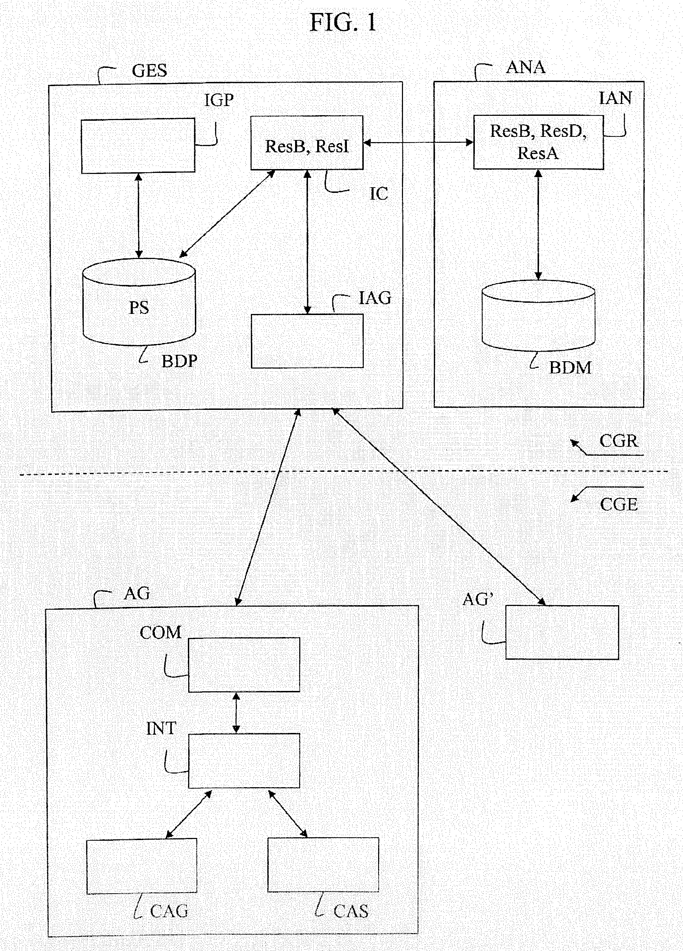

En référence à la figure 1, un système de sécurité selon une réalisation de l'invention est intégré dans un réseau de télécommunications et comprend un module de gestion GES, un module d'analyse ANA, et au moins un agent AG.

Le système de sécurité peut être géré par un opérateur du réseau de télécommunications, qui est par exemple un réseau de radiocommunications. A titre d'exemples, le réseau de télécommunications peut être également un réseau de type NGN ("Next Generation Network" en anglais) ou IMS ("IP Multimedia Subsystem" en anglais).

Le module de gestion GES et le module d'analyse ANA sont implémentés dans une couche de gestion de réseau CGR, par exemple dans un serveur dans le réseau de télécommunications. En variante, le module de gestion GES et le module d'analyse ANA peuvent être implémentés dans des équipements distincts communiquant entre eux. Chaque agent AG est implémenté dans une couche de gestion d'élément CGE, par exemple dans un dispositif relié à un ou plusieurs noeuds du réseau. Dans un réseau de radiocommunications, un noeud est par exemple une station de base. Chaque agent AG est relié au module de gestion GES par une liaison sécurisée filaire ou sans fil. Un agent AG peut être dédié à un ou plusieurs noeuds du réseau et peut être intégré à l'un des noeuds du réseau. Selon un autre exemple, le module de gestion GES et au moins un agent AG sont implémentés dans un même dispositif.

Le module de gestion GES comprend une interface de gestion de profil IGP, une interface de contrôle IC, et une interface d'agent IAG. Le module de gestion GES est lié à une base de données de profils BDP qui est intégrée dans ce dernier ou incorporée dans un serveur de gestion de base de données relié au module de gestion GES par une liaison locale ou distante.

La base de données de profils BDP comprend des informations relatives à l'invention, telles que des profils de sécurité PS correspondant à des exigences de sécurité fournies par l'opérateur.

L'opérateur définit des exigences de sécurité ("hardening" en anglais) selon un ou plusieurs niveaux de sécurité différents. Ces exigences peuvent être exprimées sous la forme d'un ensemble de paramètres de sécurité, de tests à exécuter pour des vérifications et d'actions à exécuter pour renforcer la sécurité. Par exemple, un ensemble d'exigences peut correspondre à un niveau de sécurité normal tandis qu'un autre ensemble d'exigences peut correspondre à un niveau de sécurité élevé. Un niveau de sécurité élevé peut être utilisé en cas d'attaque virale et le profil de sécurité peut contenir des instructions pour à la fois diminuer les performances des équipements du réseau et augmenter la sécurité dans ces mêmes équipements. Un niveau de sécurité élevé peut être utilisé aussi lors de l'installation de nouveaux équipements dans le réseau pour lesquels une sécurité maximale est exigée pendant une durée prédéterminée.

L'interface de gestion de profil IGP comprend un module de construction de profil pour produire un profil de sécurité PS à partir des exigences de sécurité et pour mémoriser le profil PS dans la base de données de profils BDP. Un profil de sécurité est une traduction des exigences de sécurisation en une description technique de tests complexes ou unitaires et d'actions à exécuter, et contient en outre une fiche technique listant des caractéristiques et performances attendues pour des équipements du réseau de télécommunications, ainsi que des paramètres de configuration pour des équipements de réseau. Un test complexe de vérification peut être découpé en plusieurs tests unitaires, et mémorisé en correspondance avec un algorithme pour agréger et corréler les résultats de chaque test unitaire. Le profil de sécurité PS est produit en fonction d'une description du formalisme des exigences de sécurisation et en fonction d'une description générique du profil de sécurité.

Selon une réalisation de l'invention, les différents ensembles d'exigences peuvent être exprimés dans différents langages respectifs, tels qu'un langage descriptif ou un langage codé, tandis que tous les profils de sécurité sont exprimés dans un même et unique langage.

Les profils de sécurité PS peuvent être produits de manière automatique ou semi-automatique. Par exemple, si les exigences de sécurité sont exprimées dans un formalisme prédéfini, un profil de sécurité peut être produit automatiquement. Par contre, si les exigences de sécurité ne sont pas exprimées dans un formalisme prédéfini, un profil de sécurité peut être produit semi-automatiquement, avec l'intervention d'un technicien par exemple.

L'interface de gestion de profil IGP peut être commandée par un administrateur de système et a en outre pour fonctionnalités la création, la suppression, la modification et la récupération de profils de sécurité PS de la base BDP.

L'interface de contrôle IC permet de vérifier la compatibilité d'une configuration de sécurité du réseau de télécommunications en fonctionnement à un profil de sécurité ou à certaines parties du profil de sécurité. L'interface de contrôle IC permet en outre d'appliquer tout ou partie du profil de sécurité à un ou plusieurs noeuds de réseau sélectionnés, c'est-à-dire de modifier la configuration d'un noeud en fonction du profil de sécurité.

Chaque requête issue de l'interface de contrôle IC induit une action dans au moins un noeud du réseau, que ce soit un test de vérification ou une modification de configuration. A cette fin, la requête est transmise par l'intermédiaire dé l'interface d'agent IAG à un agent AG en charge d'exécuter l'action. L'interface d'agent IAG transmet à au moins un agent AG des parties de profil de sécurité ou des commandes d'action pour un test de vérification ou pour une modification de configuration. L'interface d'agent IAG récupère également des informations provenant des agents ayant exécuté une action, par exemple au moyen d'un protocole synchrone ou asynchrone, tel que le protocole HTTPS ("Hyper Text Transfer Protocol Secure" en anglais).

Le module d'analyse ANA comprend une interface d'analyse IAN et est lié à une base de données de métriques BDM qui est intégrée dans ce dernier ou incorporée dans un serveur de gestion de base de données relié module d'analyse ANA par une liaison locale ou distante.

La base de données de métriques BDM comprend des informations relatives à l'invention, telles que des métriques correspondant à des algorithmes d'analyse qui peuvent être appliqués à des résultats de tests et de mesures relatifs à des noeuds du réseau, par exemple conformes à la norme ISO 27004.

Une métrique de base peut prendre en entrée le résultat d'un test unitaire exécuté dans un noeud donné, appelé par la suite résultat de base ResB. Une métrique dérivée peut prendre en entrée une agrégation de résultats issus de métriques de base et interpréter cette agrégation afin de fournir une information compréhensible et utilisable, par exemple par un administrateur de réseau, appelée par la suite résultat agrégé ResA. Par exemple, un profil de sécurité fournit au module de gestion GES des instructions pour vérifier le fonctionnement d'un contrôle d'accès entre deux noeuds du réseau. Un ou deux agents exécutent les deux tests unitaires respectivement dans les deux noeuds et fournissent ainsi deux résultats de base ResB au module d'analyse via le module de gestion. Un test est par exemple l'identification d'un processus de contrôle d'accès dans le noeud. Chaque résultat de base est appliqué à une métrique de base qui fournit un résultat dérivé ResD. Par exemple, si chaque résultat de base ResB indique une identité d'un processus de contrôle d'accès, alors chaque métrique de base fournit un résultat dérivé ResD indiquant que le noeud considéré utilise un contrôle d'accès. Les deux résultats dérivés ResD sont appliqués à une métrique dérivée qui permet de déduire un résultat agrégé ResA indiquant qu'un contrôle d'accès entre les deux noeuds est utilisé.

Le module d'analyse ANA analyse ainsi des résultats de tests effectués dans au moins un noeud du réseau et transmis par au moins un agent AG via le module de gestion GES. Le module d'analyse ANA peut fournir une information sur l'état de fonctionnement du noeud en fonction de métriques sélectionnées sous la commande du module de gestion GES en fonction du profil de sécurité PS utilisé.

En particulier, le module de gestion peut analyser des résultats de base provenant des agents et transmettre au module d'analyse ANA des résultats de base qui sont considérés anormaux, par exemple différents d'un résultat attendu. Selon un autre exemple, le module d'analyse ANA peut s'abonner auprès du module de gestion GES pour indiquer à ce dernier quels résultats de base pour chacune des métriques doivent être transmis au module ANA.

L'interface d'analyse IAN peut produire une notification ou une alarme suite à l'analyse des résultats transmis. L'interface d'analyse IAN peut être commandée par un administrateur de système et a en outre pour fonctionnalités la création, la suppression et la modification de métriques dans la base de données de métriques BDM. Par exemple, suite à une définition de nouvelles exigences de sécurité, de nouvelles métriques peuvent être créées dans la base BDM.

Un agent AG est dédié à au moins un noeud du réseau. Par ailleurs, un agent peut être dédié à plusieurs noeuds et plusieurs agents peuvent être dédiés à un même noeud.

Un agent AG comprend une interface de communication COM, un module d'interprétation INT et au moins un connecteur d'action qui peut être un connecteur d'action générique CAG ou un connecteur d'action spécifique CAS.

L'interface de communication COM reçoit des requêtes incluant chacune au moins une partie d'un profil de sécurité PS depuis le module de gestion GES pour exécuter une ou plusieurs actions dans au moins un noeud du réseau. Par exemple, une action peut être un test d'une configuration du noeud ou une modification de certaines parties de la configuration d'un noeud. Par exemple, l'agent exécute dans un premier temps un test de configuration d'un noeud de réseau, et en fonction du résultat de ce test, l'agent peut exécuter dans un deuxième temps une modification de configuration du noeud de réseau.

Le module d'interprétation INT interprète chaque partie de profil de sécurité transmise depuis le module de gestion GES afin d'exécuter des actions telles que des tests de configuration ou des modifications de configuration. En particulier, la partie de profil de sécurité transmise contient des instructions pour exécuter une action, ces instructions pouvant être exprimées sous forme descriptive, ou sous forme codée, tel qu'un script pouvant être exécuté directement.

Le module d'interprétation INT interprète la partie de profil de sécurité, notamment les instructions pour une action, et commande au moins un connecteur d'action pour exécuter les actions. Un connecteur d'action peut être totalement automatique ou être commandé par des scripts de commandes spécifiques. Un connecteur d'action générique CAG exécute des commandes qui sont déduites de la partie de profil de sécurité, cette dernière pouvant inclure directement des scripts de commande. Un connecteur d'action spécifique CAS est utilisé pour des actions spécifiques qui ne peuvent être exécutées par le connecteur d'action générique, telles qu'une connexion à une entité ou un logiciel externe au réseau afin de vérifier ou modifier une configuration d'un noeud.

L'agent AG transmet des résultats obtenus par les connecteurs d'action au module de gestion GES.

Selon une réalisation de l'invention, un agent qui a exécuté un test de configuration transmet au moins un résultat de base ResB au module de gestion GES, et l'interface de contrôle IC peut commander une action en fonction d'un résultat interprété ResI déduit du résultat de base ResB. Le résultat interprété Resl peut être déduit du résultat de base ResB suite à une analyse d'instructions contenues dans une partie de profil de sécurité utilisée pour obtenir le résultat de base. Selon un premier exemple, le résultat intermédiaire est produit par l'agent qui transmet alors à la fois le résultat de base ResB et le résultat interprété ResI au module de gestion GES. Selon un deuxième exemple, l'agent ne transmet que le résultat de base ResB au module de gestion et l'interface de contrôle IC produit elle-même le résultat interprété ResI correspondant au résultat de base ResB.

Le résultat interprété ResI fournit une indication compréhensible et utilisable par l'interface de contrôle IC pour commander une action. Par exemple, le résultat interprété ResI peut être comparé à un résultat attendu, tel qu'une valeur de référence. Si le résultat interprété ResI diffère du résultat attendu, par exemple au-delà d'un seuil prédéfini, l'interface de contrôle IC peut produire une notification ou une alarme pour alerter un administrateur de réseau. En outre, l'interface de contrôle IC peut transmettre une autre requête à un ou plusieurs agents pour que ces derniers appliquent une partie de profil de sécurité à certains noeuds et modifient ainsi la configuration de ces noeuds.

Par ailleurs, lorsque l'interface de contrôle IC constate que plusieurs résultats interprétés ResI parmi l'ensemble des résultats reçus présentent une erreur, c'est-à-dire diffèrent des résultats attendus respectifs, l'interface IC transmet les résultats de base ResB correspondant à ces résultats interprétés ResI au module d'analyse ANA. Ce dernier applique des métriques aux résultats de base ResB pour produire des résultats dérivés ResD, dont la signification peut être similaire à celle des résultats interprétés ResI, Les résultats dérivés ResD sont agrégés et appliqués à une métrique dérivée qui fournit un résultat agrégé ResA. Ce résultat agrégé est alors transmis au module de gestion qui peut commander d'autres actions. Chaque résultat interprété ResI présentant une erreur et pris de manière isolée peut ne traduire qu'une déviance par rapport à la configuration de sécurité souhaitée, tandis qu'un résultat agrégé ResA dépendant de ces résultats interprétés peut traduire une réelle faille dans la configuration de sécurité.

Selon un exemple décrit précédemment, un profil de sécurité comprend des instructions pour vérifier le fonctionnement d'un contrôle d'accès entre deux noeuds du réseau. Deux tests unitaires sont respectivement exécutés dans les deux noeuds pour fournir ainsi deux résultats de base ResB. Un test unitaire est par exemple l'identification d'un processus de contrôle d'accès dans le noeud et chaque résultat de base ResB indique par exemple une identité d'un processus de contrôle d'accès. Un résultat interprété ResI correspondant à un résultat de base ResB indique par exemple que le noeud considéré utilise un contrôle d'accès.

Chaque résultat interprété ResI peut être comparé à une référence ou un résultat attendu inclus dans la partie du profil de sécurité. Dans ce cas particulier, la référence peut correspondre à l'identité d'un contrôle d'accès qui doit être utilisé par chaque noeud du réseau. Si au moins l'un des deux résultats interprétés diffère des résultats attendus, les résultats de base correspondant peuvent être analysés afin d'en déduire un résultat agrégé ResA. Ainsi, un résultat interprété ResI considéré erroné peut traduire qu'un noeud utilise un contrôle d'accès, qui peut être différent du contrôle d'accès conforme au profil de sécurité, tandis que le résultat agrégé ResA peut traduire qu'il n'existe pas de contrôle d'accès entre les deux noeuds, ne qui correspond à une faille de sécurité pour la communication entre ces deux noeuds.

Selon un autre exemple, un profil de sécurité comprend des instructions pour vérifier que l'accès à un noeud du réseau est sécurisé, c'est-à-dire que le noeud ne doit être accessible que par un moyen ou protocole considéré sécurisé. Plusieurs séries de tests unitaires peuvent être exécutées dans le nceud pour fournir différents résultats. Une série de test vérifie que des moyens d'accès non sécurisé au noeud ont bien été désinstallés, tels que des protocoles "telnet" ou "ftp". Des résultats interprétés Resl issus de cette série de test peuvent être comparés à une liste de références qui correspondent aux protocoles considérés non sécurisés. Une autre série de test vérifie que des moyens d'accès sécurisé au noeud ont bien été installés et bien configurés. Des résultats interprétés Resl issus de cette autre série de test peuvent être comparés à une liste de références qui correspondent aux protocoles considérés sécurisés, spécifiant les protocoles indispensables. D'autres résultats interprétés ResI peuvent être comparés à des références qui correspondent à des données de configuration, telle que la taille minimale d'une clef de chiffrement. Différentes algorithmes appliqués à ces résultats peuvent indiquer la liste des protocoles non sécurisés utilisés par le noeud, ou la liste des protocoles indispensables qui ne sont pas utilisés par le noeud ou mal configurés. Un autre algorithme appliqué à ces résultats peut attribuer une note à l'accès sécurisé au noeud, par exemple sur une échelle de "0" à "5", "0" signifiant que de nombreux protocoles non sécurisés sont utilisés, et "5" signifiant que tous les protocoles indispensables sont utilisés et bien configurés et qu'aucun protocole non sécurisé n'est utilisé.

Il peut être considéré que le module de gestion GES et un agent AG sont configurés selon une structure client-serveur dans laquelle le module de gestion GES a un rôle de serveur gérant un ou plusieurs agents qui ont un rôle de client. Ainsi, comme illustré à la figure 1, le module de gestion GES peut être connecté à un agent AG et au moins un autre agent AG'.

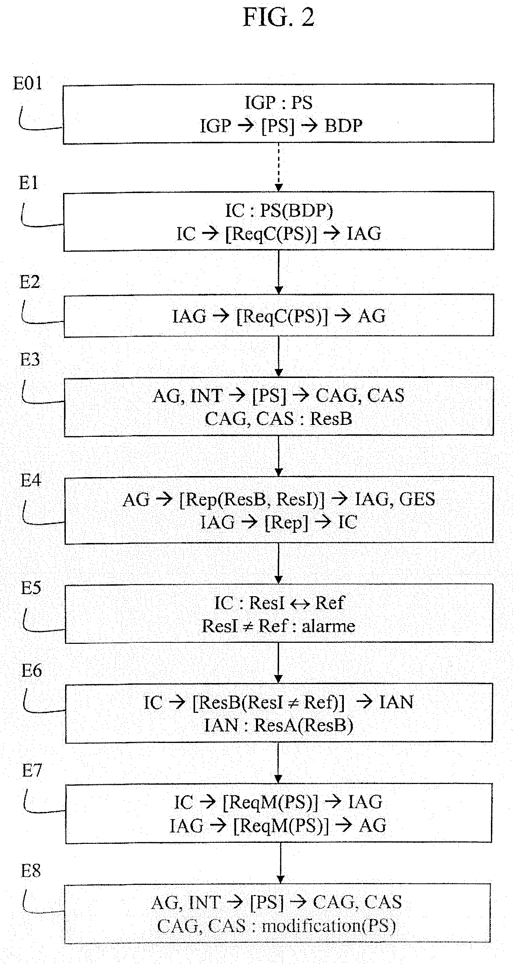

En référence à la figure 2, un procédé de contrôle de configuration de sécurité selon une réalisation de l'invention comprend des étapes E1 à E8, exécutées automatiquement dans le système de sécurité selon l'invention.

Le système de sécurité est implémenté dans un réseau de télécommunications et géré par l'opérateur du réseau de télécommunications.

A une étape préliminaire E01, l'opérateur définit un ou plusieurs ensembles d'exigences de sécurité correspondant à un ou plusieurs niveaux de sécurité pour des équipements du réseau. L'interface de gestion de profil IGP, éventuellement avec l'assistance d'un administrateur de réseau, produit des profils de sécurité PS en fonction des exigences de sécurisation pour des équipements du réseau. L'interface de gestion de profil IGP mémorise les profils de sécurité PS dans la base de données de profils BDP.

L'étape préliminaire E01 est exécutée de manière « hors-ligne », c'est-à-dire sans qu'il soit nécessaire que le module de gestion GES communique avec des agents AG ou des équipements du réseau. A l'issue de l'étape E01, le module de gestion GES dispose dans la base de données de profils BDP de toutes les informations utiles au contrôle de sécurité des équipements du réseau.

Les étapes suivantes E1 à E8 sont alors exécutées de manière «en ligne», c'est-à-dire par le module de gestion GES communiquant avec le module d'analyse ANA et au moins un agent AG.

A l'étape E1, l'interface de contrôle IC du module de gestion GES initie une session de contrôle de sécurité, notamment pour vérifier ou modifier la configuration et le fonctionnement de certains équipements du réseau en fonction d'un profil de sécurité PS. A cette fin, l'interface IGP consulte la base de données de profils BDP pour trouver un profil de sécurité PS et transmet une requête de contrôle ReqC contenant au moins une partie du profil de sécurité PS à l'interface d'agent IAG.

A l'étape E2, l'interface d'agent IAG analyse la requête de contrôle ReqC et identifie les agents AG requis pour effecteur le contrôle de sécurité. Par exemple, l'interface d'agent IAG identifie à partir de la partie de profil de sécurité PS les noeuds ou les équipements de réseau à tester et par conséquent les agents AG aptes à effectuer des tests sur ces équipements de réseau. L'interface d'agent IAG retransmet la requête de contrôle ReqC à chacun des agents identifiés. Plus particulièrement, l'interface d'agent IAG peut transmettre à chaque agent identifié une requête dont le contenu correspond à une partie du profil de sécurité qui est inclus dans la requête de contrôle ReqC et qui est relatif aux équipements de réseau auxquels est dédié l'agent identifié.

A l'étape E3, chaque agent AG reçoit la requête de contrôle ReqC via l'interface de communication IC et interprète la partie de profil de sécurité PS contenue dans la requête au moyen du module d'interprétation INT. En particulier, le module d'interprétation INT identifie le ou les connecteurs d'action génériques CAG ou spécifiques CAS aptes à exécuter des actions selon des instructions, telles que des commandes, spécifiées dans la partie de profil de sécurité PS. Chaque connecteur d'action exécute ainsi au moins une action, telle qu'un test de vérification de configuration, dans un équipement de réseau et fournit un résultat de base ResB suite à l'exécution de l'action. Les résultats de base sont alors transmis à l'interface de communication IC via le module d'interprétation INT.

Optionnellement, le module d'interprétation INT transforme des résultats de base ResB respectivement en des résultats interprétés ResI en fonction de la partie de profil de sécurité PS. Le module d'interprétation INT transmet les résultats de base, ainsi que les résultats interprétés associés, à l'interface de communication IC.

A l'étape E4, l'agent AG produit une réponse Rep incluant le ou les résultats de base ResB, ainsi que les éventuels résultats interprétés ResI, transmis par le module d'interprétation INT. L'agent AG transmet la réponse Rep à l'interface d'agent IAG du module de gestion GES. L'interface d'agent reçoit une réponse Rep depuis chacun des agents identifiés précédemment à l'étape E2 et retransmet cette réponse à l'interface de contrôle IC. Optionnellement, l'interface d'agent attend de recevoir toutes les réponses Rep avant de produire une réponse globale regroupant le contenu, et notamment les résultats ResB et ResI, de chaque réponse reçue et de transmettre cette réponse globale à l'interface de contrôle IC.

L'interface de contrôle IC identifie les résultats de base ResB qui ne sont associés à aucun résultat interprété, et transforme ces résultats de base ResB respectivement en des résultats interprétés ResI.

A l'issue de l'étape E4, l'interface de contrôle IC dispose donc de résultats de base ResB et de résultats interprétés Resl respectivement associés aux résultats de base ResB.

A l'étape E5, l'interface de contrôle IC compare les résultats interprétés ResI respectivement à des références Ref incluses dans le profil de sécurité PS. Si au moins un résultat interprété ResI n'est pas compatible avec une référence associée selon une politique prédéfinie dans le profil de sécurité, l'interface IC peut produire une notification ou une alarme, indiquant par exemple que le test relatif au résultat ResI est un échec.

Le module de gestion GES peut établir un rapport révélant le pourcentage des résultats interprétés ResI qui sont compatibles avec le profil de sécurité PS.

Optionnellement, l'interface de contrôle IC peut collaborer avec le module d'analyse ANA pour une analyse plus approfondie des résultats des tests effectués par les agents, notamment des résultats non compatibles avec le profil de sécurité, selon une étape optionnelle E6.

A l'étape optionnelle E6, l'interface de contrôle IC transmet à l'interface d'analyse IAN au moins une partie des résultats de base ResB qui sont associés à des résultats interprétés ResI non compatibles avec le profil de sécurité PS. L'interface d'analyse IAN applique chaque résultat de base ResB à une métrique de base qui fournit un résultat dérivé ResD. Puis à l'interface d'analyse IAN applique les résultats dérivés ResD à une métrique dérivée qui fournit un résultat agrégé ResA.

L'interface d'analyse IAN peut produire une notification ou une alarme suite à l'analyse du résultat agrégé obtenu qui peut révéler un problème de configuration de sécurité. Par exemple, si le module de gestion GES a établi un rapport révélant un pourcentage de 10% des résultats interprétés Resl qui ne sont pas compatibles avec le profil de sécurité PS, alors le module d'analyse ANA fournit une information supplémentaire indiquant que parmi ces 10% de résultats interprétés ResI, 8% correspondent à des problèmes de sécurité considérés comme simples ou basiques et 2% correspondent à un problème sérieux de sécurité, par exemple relatif à une faille dans la configuration d'un service offert par le réseau qui est vulnérable à des actes malveillants.

Ce résultat agrégé ResA peut être utilisé par un administrateur de réseau pour lancer des opérations afin de remédier au problème observé, ou peut être transmis au module de gestion GES qui lance automatiquement de nouvelles requêtes aux agents, par exemple pour corriger une configuration du ou des équipements de réseau pour lesquels au moins un test a échoué.

A l'étape E7, l'interface de contrôle IC identifie les résultats interprétés ResI qui ne sont pas compatibles respectivement avec des références associées Ref selon une politique prédéfinie dans le profil de sécurité. L'interface de contrôle IC identifie en outre une partie du profil de sécurité PS qui correspond aux résultats ResI identifiés. En particulier, cette partie de profil contient notamment des paramètres de configuration pour les équipements de réseau correspondant aux résultats ResI identifiés, et des instructions pour appliquer ces paramètres de configuration aux équipements de réseau, en modifiant ainsi la configuration de ces équipements.

L'interface IC transmet une requête de modification ReqM contenant ladite partie du profil de sécurité PS à l'interface d'agent IAG. De manière similaire à l'étape E2, l'interface d'agent IAG analyse la requête de modification ReqM et identifie les agents AG requis pour effecteur des modifications de configuration de sécurité, en fonction de ladite partie de profil de sécurité PS. L'interface d'agent IAG retransmet la requête de modification ReqM à chacun des agents identifiés. Plus particulièrement, l'interface d'agent IAG peut transmettre à chaque agent identifié une requête dont le contenu correspond à une partie du profil de sécurité qui est inclus dans la requête de modification ReqM et qui est relatif aux équipements de réseau auxquels est dédié l'agent identifié.

A l'étape E8, chaque agent AG reçoit la requête de modification ReqM via l'interface de communication IC et interprète la partie de profil de sécurité PS contenue dans la requête au moyen du module d'interprétation INT. En particulier, le module d'interprétation INT identifie le ou les connecteurs d'action génériques CAG ou spécifiques CAS aptes à exécuter des modifications selon des instructions spécifiées dans la partie de profil de sécurité PS. Chaque connecteur d'action modifie la configuration d'au moins un équipement de réseau, en appliquant à ce dernier des paramètres de configuration inclus dans la partie de profil de sécurité PS, en fonction des instructions comprises dans cette partie de profil.

Optionnellement, chaque agent peut transmettre un message au module de gestion pour confirmer que la modification de configuration dans chaque équipement identifié a bien été effectuée.

A l'issue du procédé, le module de gestion GES a transmis dans un premier temps une requête pour effectuer des tests de vérification de configuration de certains équipements de réseau, et suite à l'analyse des résultats des tests, le module de gestion peut transmettre dans un deuxième temps une autre requête pour effectuer des modifications de configuration des équipements de réseau pour lesquels les résultats des tests sont inacceptables par rapport à un profil de sécurité.

Optionnellement, la requête de contrôle ReqC reçue à l'étape E3 par au moins un agent AG, ou chacun des agents AG, contient en outre des instructions pour exécuter des actions, tels que des tests de vérification de configuration, après un ou plusieurs délais prédéterminés ou à des dates prédéterminées. Ainsi, à l'expiration de chaque délai prédéterminé ou à chaque date prédéterminée, les étapes E3 à E8 du procédé peuvent être répétées.

## Revendications

1. Procédé pour contrôler la configuration d'équipements dans un réseau de télécommunications, **caractérisé en ce qu'**il comprend les étapes suivantes :
transmettre (E2) depuis un serveur (GES) au moins une requête (ReqC) contenant une partie d'un profil de sécurité (PS) à au moins un agent (AG) dédié à au moins un équipement de réseau,
exécuter (E3, E4) dans l'agent au moins un test d'une configuration d'un équipement de réseau en fonction de ladite partie du profil de sécurité et produire un résultat (ResB) de ce test,
transmettre (E4) depuis l'agent une réponse (Rep) contenant le résultat (ResB) au serveur,
si le résultat (ResB) diffère d'une référence (Ref) incluse dans ladite partie du profil de sécurité, transmettre (E7) depuis le serveur une autre requête (ReqM) contenant une autre partie du profil de sécurité (PS) à l'agent, et
modifier (E8) dans l'agent la configuration de l'équipement du réseau en fonction de ladite autre partie du profil de sécurité.

2. Procédé conforme à la revendication 1, selon lequel le serveur reçoit au moins deux résultats (ResB) qui diffèrent de références respectives (Ref), et les deux résultats sont appliqués (E6) à un ensemble d'algorithmes pour fournir un autre résultat (ResA en fonction duquel est déterminée ladite autre partie du profil de sécurité contenue dans la requête (ReqM) à transmettre (E7) à l'agent (AG).

3. Procédé conforme à la revendication 2, selon lequel le serveur a transmis au moins deux requêtes (ReqC) contenant la partie de profil de sécurité (PS) à l'agent (AG) dédié à deux équipements de réseau, et transmet la requête (ReqM) contenant ladite autre partie du profil à l'agent.

4. Procédé conforme à la revendication 2, selon lequel le serveur a transmis au moins deux requêtes (ReqC) contenant respectivement des parties d'un profil de sécurité (PS) à au moins deux agents (AG), et transmet au moins deux requêtes (ReqC) contenant ladite autre partie du profil aux deux agents.

5. Procédé conforme à l'une des revendications 1 à 4, selon lequel le profil de sécurité (PS) est déterminé en fonction d'exigences de l'opérateur du réseau de télécommunications.

6. Procédé conforme à l'une des revendications 1 à 5, selon lequel le profil de sécurité (PS) contient des instructions pour interpréter au moins un résultat (ResB) d'un test d'une configuration d'un équipement de réseau en un résultat interprété (ResI) afin que le résultat interprété soit comparé à une référence (Ref) incluse dans le profil de sécurité.

7. Système pour contrôler la configuration d'équipements dans un réseau de télécommunications, comprenant un serveur (GES) relié à au moins un dispositif (AG), **caractérisé en ce que** :
le serveur comprend des moyens (IC, IAG) pour transmettre au moins une requête (ReqC) contenant une partie d'un profil de sécurité (PS) à l'agent,
l'agent comprend des moyens (INT) pour exécuter au moins un test d'une configuration d'un équipement de réseau en fonction de ladite partie du profil de sécurité et produire un résultat (ResB) de ce test, et des moyens (COM) pour transmettre une réponse (Rep) contenant le résultat (ResB) au serveur,
le serveur comprend des moyens (IC, IAG) pour transmettre une autre requête (ReqM) contenant une autre partie du profil de sécurité (PS) à l'agent, si le résultat (ResB) diffère d'une référence (Ref) incluse dans ladite partie du profil de sécurité, et
l'agent comprend des moyens (INT) pour modifier la configuration de l'équipement du réseau en fonction de ladite autre partie du profil de sécurité pour modifier.

8. Serveur (GES) pour contrôler la configuration d'équipements dans un réseau de télécommunications, **caractérisé en ce qu'**il comprend:
des moyens (IC, IAG) pour transmettre au moins une requête (ReqC) contenant une partie d'un profil de sécurité (PS) à au moins un agent (AG) dédié à au moins un équipement de réseau, afin que l'agent exécute au moins un test d'une configuration d'un équipement de réseau en fonction de ladite partie du profil de sécurité, produise un résultat (ResB) de ce test, et transmette une réponse (Rep) contenant le résultat (ResB) au serveur,
des moyens (IC, IAG) pour transmettre, si le résultat (ResB) diffère d'une référence (Ref) incluse dans ladite partie du profil de sécurité, une autre requête (ReqM) contenant une autre partie du profil de sécurité (PS) à l'agent, afin que l'agent modifie la configuration de l'équipement du réseau en fonction de ladite autre partie du profil de sécurité.

9. Agent (AG) pour contrôler la configuration d'équipements dans un réseau de télécommunications, **caractérisé en ce qu'**il comprend:
des moyens (COM) pour recevoir au moins une requête (ReqC) transmise depuis un serveur (GES) et contenant une partie d'un profil de sécurité (PS),
des moyens (INT) pour exécuter au moins un test d'une configuration d'un équipement de réseau en fonction de ladite partie du profil de sécurité et produire un résultat (ResB) de ce test,
des moyens (COM) pour transmettre une réponse (Rep) contenant le résultat (ResB) au serveur,
des moyens (COM) pour recevoir une autre requête (ReqM) transmise depuis le serveur (GES) et contenant une autre partie du profil de sécurité (PS), si le résultat (ResB) diffère d'une référence (Ref) incluse dans ladite partie du profil de sécurité, et
des moyens (INT) pour modifier la configuration de l'équipement du réseau en fonction de ladite autre partie du profil de sécurité.

## Patentansprüche

1. Verfahren zur Steuerung der Konfiguration von Vorrichtungen in einem Telekommunikationsnetz, **dadurch gekennzeichnet, dass** es die folgenden Schritte umfasst:
das Übermitteln (E2) mindestens einer Anfrage (Requête, ReqC), die einen Teil eines Sicherheitsprofils (PS) enthält, von einem Server (GES) an mindestens ein Agentgerät (AG), das mindestens einer Netzvorrichtung zugeordnet ist,
das in dem Agentgerät erfolgende Ausführen (E3, E4) mindestens eines Tests einer Konfiguration einer Netzvorrichtung in Funktion des besagten Teils des Sicherheitsprofils und das Hervorbringen eins Resultats (ResB) dieses Tests,
das Übermitteln (E4) einer Antwort (Reponse, Rep), welche das Resultat (ResB) enthält, von dem Agentgerät an den Server,
wenn Das Resultat (ResB) von einer Referenz (Ref) abweicht, die in besagtem Teil des Sicherheitsprofils enthalten ist, das Übermitteln (E7) einer weiteren Anfrage (ReqM), die einen weiteren Teil des Sicherheitsprofils (PS) enthält, von dem Server an das Agentgerät, und
das Modifizieren (E8) der Konfiguration der Netzvorrichtung in dem Agentgerät in Funktion des besagten weiteren Teils des Sicherheitsprofils.

2. Verfahren nach Anspruch 1, wobei der Server mindestens zwei Resultate (ResB) empfängt, die von entsprechenden Referenzen (Ref) abweichen, und wobei die besagten, mindestens zwei Resultate auf eine Gruppe von Algorithmen angewendet werden (E6), um ein weiteres Resultat (ResA) bereitzustellen, in Funktion dessen der besagte weitere Teil des Sicherheitsprofils bestimmt wird, der in der an das Agentgerät (AG) zu übermittelnden (E7) Anfrage (ReqM) enthalten ist.

3. Verfahren nach Anspruch 2, wobei der Server mindestens zwei Anfragen (ReqC), welche den Teil des Sicherheitsprofils (PS) enthalten, an das Agentgerät (AG) übermittelt hat, welches mindestens zwei Netzvorrichtungen zugeordnet ist, und wobei der Server die Anfrage (ReqM), welche besagten weiteren Teil des Profils enthält, an das Agentgerät übermittelt.

4. Verfahren nach Anspruch 2, wobei der Server mindestens zwei Anfragen (ReqC), welche jeweils Teile eines Sicherheitsprofils (PS) enthalten, an mindestens zwei Agentgeräte (AG) übermittelt hat, und wobei der Server mindestens zwei Anfragen (ReqC), welche besagten weiteren Teil des Profils enthalten, an die zwei Agentgeräte übermittelt.

5. Verfahren nach einem der Ansprüche 1 bis 4, wobei das Sicherheitsprofil (PS) in Funktion der Anforderungen des Betreibers des Telekommunikationsnetzes bestimmt wird.

6. Verfahren nach einem der Ansprüche 1 bis 5, wobei das Sicherheitsprofil (PS) Anweisungen zur Interpretation von mindestens einem Resultat (ResB) eines Tests einer Konfiguration einer Netzvorrichtung und ein interpretiertes Resultat (ResI) umfasst, damit das interpretierte Resultat mit einer Referenz (Ref) verglichen wird, die in dem Sicherheitsprofil enthalten ist.

7. System zur Steuerung der Konfiguration von Vorrichtungen in einem Telekommunikationsnetz, einen Server (GES) umfassend, der mit mindestens einer Vorrichtung (AG) verbunden ist, **dadurch gekennzeichnet, dass**:
der Server Mittel (IC, IAG) zum Übermitteln mindestens einer Anfrage (ReqC), die einen Teil eines Sicherheitsprofils (PS) enthält, an das Agentgerät umfasst,
das Agentgerät Mittel (INT) zum Ausführen von mindestens einem Test einer Konfiguration einer Netzvorrichtung in Funktion des besagten Teils des Sicherheitsprofils und zum Hervorbringen eines Resultats (ResB) des besagten Tests umfasst, sowie weiterhin Mittel (COM) zum Übermitteln einer das Resultat (ResB) enthaltenden Antwort (Rep) an den Server,
der Server Mittel (IC, IAG) umfasst, um eine weitere, einen weiteren Teil des Sicherheitsprofils (PS) enthaltende Anfrage (ReqM) an das Agentgerät zu übermitteln, wenn das Resultat (ResB) von einer Referenz (Ref) abweicht, die in besagtem Sicherheitsprofil enthalten ist, und
das Agentgerät Mittel (INT) für das Modifizieren der Konfiguration der Netzvorrichtung in Funktion des besagten weiteren Teils des zu modifizierenden Sicherheitsprofils umfasst.

8. Server (GES) zur Steuerung der Konfiguration von Vorrichtungen in einem Telekommunikationsnetz, **dadurch gekennzeichnet, dass** er umfasst:
Mittel (IC, IAG) für das Übermitteln mindestens einer Anfrage (ReqC), die einen Teil eines Sicherheitsprofils (PS) umfasst, an mindestens ein Agentgerät (AG), das mindestens einer Netzvorrichtung zugeordnet ist, damit das Agentgerät in Funktion besagten Teils des Sicherheitsprofils mindestens einen Test einer Konfiguration einer Netzvorrichtung vornimmt, ein Resultat (ResB) dieses Tests hervorbringt und an den Server eine Antwort (Rep) übermittelt, welche das Resultat (ResB) enthält,
Mittel (IC, IAG), um dann, wenn das Resultat (ResB) von einer in besagtem Teil des Sicherheitsprofils enthaltenen Referenz (Ref) abweicht, eine weitere Anfrage (ReqM), die einen weiteren Teil des Sicherheitsprofils (PS) enthält, an das Agentgerät zu übermitteln, damit das Agentgerät die Konfiguration der Netzvorrichtung in Funktion des besagten weiteren Teils des Sicherheitsprofils modifiziert.

9. Agentgerät (AG) zur Steuerung der Konfiguration von Vorrichtungen in einem Telekommunikationsnetz, **dadurch gekennzeichnet, dass** es umfasst:
Mittel (COM) für den Empfang mindestens einer Anfrage (ReqC), die von einem Server (GES) übermittelt wurde und einen Teil eines Sicherheitsprofils (PS) enthält,
Mittel (INT) für das Ausführen mindestens eines Tests einer Konfiguration einer Netzvorrichtung in Funktion des besagten Teils des Sicherheitsprofils und das Hervorbringen eins Resultats (ResB) dieses Tests,
Mittel (COM) für das Übermitteln einer Antwort (Rep), welche das Resultat (ResB) enthält, an den Server,
Mittel (COM) für den Empfang einer weiteren Anfrage (ReqM), die von dem Server (GES) übermittelt wurde und einen weiteren Teil des Sicherheitsprofils (PS) enthält, wenn das Resultat (ResB) von einer Referenz (Ref) abweicht, die in dem besagten Teil des Sicherheitsprofils enthalten ist, und
Mittel (INT) für das Modifizieren der Konfiguration der Netzvorrichtung in Funktion des besagten weiteren Teils des zu Sicherheitsprofils.

## Claims

1. A method for controlling the configuration of devices in a telecommunications network, **characterized in that** it comprises the following steps:
transmitting (E2) from a server (GES) at least one request (ReqC) containing part of a security profile (PS) to at least one agent (AG) dedicated to at least one network device,
executing (E3, E4) within the agent at least one test of a configuration of a network device based on said part of the security profile and producing a result (ResB) of that test,
transmitting (E4) from the agent a response (Rep) containing the result (ResB) to the server,
if the result (ResB) differs from a reference (Ref) included in said part of the security profile, transmitting (E7) from the server another request (ReqM) containing another part of the security profile (PS) to the agent, and
modifying (E8) in the agent the configuration of the network device based on said other part of the security profile.

2. A method according to claim 1, whereby the server receives at least two results (ResB) that differ from respective references (Ref), and the two results are applied (E6) to a set of algorithms for providing another result (ResA) based on which the other part of the security profile contained in the request (ReqM) to be transmitted (E7) to the agent (AG) is determined.

3. A method according to claim 2, whereby the server transmitted at least two requests (ReqC) containing the security profile part (PS) to the agent (AG) dedicated to two network devices, and transmits request (ReqM) containing said other part of the profile to the agent.

4. A method according to claim 2, whereby the server transmitted at least two requests (ReqC) respectively containing parts of a security profile (PS) to at least two agents (AG), and transmits at least two requests (ReqC) containing said other part of the profile to the two agents.

5. A method according to one of the claims 1 to 4, whereby the security profile (PS) is determined based on requirements of the operator of the telecommunications network.

6. A method according to any one of the claims 1 to 5, whereby the security profile (PS) contains instructions for interpreting at least one result (ResB) of a test of the configuration of a network device as an interpreted result (Resl) so that the interpreted result is compared to a reference (Ref) included in the security profile.

7. A system for controlling the configuration of devices and a telecommunications network, comprising a server (GES) connected to at least one apparatus (AG), **characterized in that**:
the server comprises means (IC, IAG) for transmitting at least one request (ReqC) containing a part of a security profile (PS) to the agent,
the agent comprises means (INT) for executing at least one test of a configuration of a network device based on said part of the security profile and producing a result (ResB) of that test, and means (COM) for transmitting a response (Rep) containing the result (ResB) to the server,
the server comprises means (IC, IAG) for transmitting another request (ReqM) containing another part of the security profile (PS) to the agent, if the result (ResB) differs from a reference (Ref) included in said part of the security profile, and
the agent comprises means (INT) for modifying the configuration of the network device based on said other part of the security profile to modify.

8. A server (GES) for controlling the configuration of devices in a telecommunications network, **characterized in that** it comprises:
means (IC, IAG) for transmitting at least one request (ReqC) containing a part of a security profile (PS) to at least one agent (AG) dedicated to at least one network device, in order for the agent to execute at least one test of a configuration of a network device based on said part of the security profile, produces a result (ResB) of that test, and transmits a response (Rep) containing the result (ResB) to the server,
means (IC, IAG) for transmitting, if the results (ResB) differs from a reference (Ref) included in said part of the security profile, another request (ReqM) containing another part of the security profile (PS) to the agent, so that the agent modifies the configuration of the network device based on said other part of the security profile.

9. An agent (AG) for controlling the configuration of devices in a telecommunications network, **characterized in that** it comprises:
means (COM) for receiving at least one request (ReqC) transmitted from a server (GES) and containing a part of a security profile (PS),
means (INT) for executing at least one test of a configuration of a network device based on said part of the security profile and producing a result (ResB) of that test,
means (COM) for transmitting a response (Rep) containing the result (ResB) to the server,
means (COM) for receiving another request (ReqM) transmitted from the server (GES) and containing another part of the security profile (PS), if the result (ResB) differs from a reference (Ref) included in said part of the security profile, and
means (INT) for modifying the configuration of the network device based on said other part of the security profile.
